Europäisches Patentamt

European Patent Office

Office européen des brevets

(19)

(11) Numéro de publication : **0 462 886 A1**

(12) # DEMANDE DE BREVET EUROPEEN

(21) Numéro de dépôt : **91401630.8**

(22) Date de dépôt : **18.06.91**

(51) Int. Cl.⁵ : **G01M 13/02**

(30) Priorité : **18.06.90 FR 9007590**

(43) Date de publication de la demande :
**27.12.91 Bulletin 91/52**

(84) Etats contractants désignés :
**DE ES GB IT**

(71) Demandeur : **REGIE NATIONALE DES USINES RENAULT S.A.**
**34, Quai du Point du Jour**
**F-92109 Boulogne Billancourt (FR)**

(72) Inventeur : **Mairesse, Philippe**
**8, Allée André Breton**
**F-93270 Sevran (FR)**
Inventeur : **Favre, Bernard**
**32, rue Marcel Sembat**
**F-78140 Velizy (FR)**
Inventeur : **Senicourt, Jacques-Marie**
**35, Avenue Vauban**
**F-93250 Villemomble (FR)**
Inventeur : **Tebec, Jean-Louis**
**32, Allée des Troènes**
**F-91190 Gif-Sur-Yvette (FR)**

(54) **Procédé et appareil de mesure de l'erreur cinematique d'un couple d'engrenages.**

(57)    Procédé pour mesurer l'erreur cinématique d'un couple d'engrenages primaire ou entraîneur et secondaire (2) ou entraîné en fonctionnement, consiste à :
— mesurer l'accélération tangentielle de l'arbre de rotation (4) de l'engrenage secondaire à l'aide de deux accéléromètres (5) fixés de façon diamètralement opposés l'un à l'autre sur un support rigide (3) rendu solidaire de l'arbre secondaire (4) ;
— émettre des signaux de mesure accéléromètrique à l'aide d'un émetteur (6) relié aux accéléromètres et rendu solidaire de l'arbre secondaire ;
— capter les signaux accélérométriques émis à l'aide d'un récepteur (7) immobile et placé sans contact au voisinage de l'émetteur ; et
— effectuer une analyse temporelle et instantanée des signaux captés grâce à un moyen de traitement du signal relié au récepteur (7) pour convertir lesdits signaux accélérométriques en signaux de déplacement angulaire instantané du couple d'engrenages primaire et secondaire.
    Appareil pour la mise en oeuvre du procédé.

# FIG.2

EP 0 462 886 A1

La présente invention concerne un procédé pour mesurer l'erreur cinématique, ou encore appelée erreur composée tangentielle, d'un couple d'engrenages, ainsi qu'un appareil de mise en oeuvre du procédé.

L'erreur cinématique, ou l'erreur composée tangentielle, est connue comme étant la différence instantanée entre la position angulaire réelle et la position angulaire théorique d'un engrenage récepteur, toute cause confondue.

Pour un couple d'engrenages donné, les causes de l'erreur cinématique sont nombreuses et peuvent être énoncées comme suit :

- erreurs de profil, erreurs de division, erreurs d'hélice pour chaque dent d'engrenage;
- erreurs de faux rond ou d'excentricité donnant l'erreur radiale et la variation d'entraxe entre les deux engrenages du couple;
- déformation des dentures, en flexion, lorsque les engrenages sont sous charge;
- déformation des arbres de rotation et des carters associés d'engrenages;
- influence des vibrations de flexion et de torsion des lignes de rotation;
- usure des dentures d'engrenages; et
- erreurs géométriques diverses dues au montage, aux liaisons, etc.

Les deux causes énumérées en premier sont essentiellement liées aux défauts de fabrication.

On sait caractériser l'erreur cinématique due à ces deux causes sur un banc de mesure en utilisant des capteurs optiques avec des vitesses de rotation d'engrenages extrêmement faibles (quelques tours par minute en général). Cette technique ne permet pas de mesurer l'erreur cinématique lorsque le couple d'engrenages est soumis à des régimes de fonctionnement courant qui sont de l'ordre de quelques milliers de tours par minute. En outre, la technique existante ne permet pas de rendre compte de la mesure des autres causes de l'erreur cinématique précédemment énoncées.

La présente invention a pour objet un procédé et un appareil permettant d'effectuer des mesures de l'erreur cinématique qui tient compte de toutes les causes connues et pour des conditions de fonctionnement réel du couple d'engrenages.

Le procédé pour mesurer l'erreur cinématique d'un couple d'engrenages primaire ou entraîneur et secondaire ou entraîné en fonctionnement, selon l'invention, consiste à utiliser deux accéléromètres fixés de façon diamètralement opposée l'un de l'autre sur un support rigide rendu solidaire de l'arbre de rotation de l'arbre secondaire; à utiliser un couple émetteur/ récepteur pour transmettre des signaux de mesure accélérométriques à un moyen de traitement du signal; et à effectuer une analyse temporelle et fréquentielle des signaux par une double intégration temporelle instantanée pour obtenir des valeurs de déplacement angulaire instantané de l'engrenage secondaire.

L'appareil pour la mise en oeuvre du procédé de l'invention comprend deux accéléromètres fixés de façon diamètralement opposée l'un de l'autre sur un support rigide rendu solidaire de l'arbre de rotation secondaire; un émetteur relié aux accéléromètres et rendu solidaire de l'arbre de rotation secondaire; un récepteur ou antenne immobile au voisinage de l'émetteur; et un moyen de traitement du signal relié au récepteur pour convertir les signaux accélérométriques mesurés par les accéléromètres, en déplacement angulaire instantané de l'engrenage secondaire.

De préférence, le support rigide sur lequel sont montés les accéléromètres est constitué par un disque monté au voisinage de l'engrenage secondaire. On peut également monter directement les accéléromètres sur un côté de l'engrenage secondaire.

L'émetteur peut être monté sur le même support rigide que les accéléromètres ou un support rigide séparé. Le récepteur est avantageusement réalisé sous forme d'un anneau qui entoure l'émetteur de façon sans contact avec ce dernier.

L'invention permet de caractériser la qualité géométrique du couple d'engrenages en fonctionnement réel. Le moyen de traitement du signal permet d'effectuer une analyse temporelle et fréquentielle dynamique et instantanée des signaux accélérométriques issus des accéléromètres. Grâce à une double intégration temporelle instantanée des signaux, on peut obtenir le déplacement angulaire pour chaque dent de l'engrenage secondaire intantanément.

Le montage en opposition des deux accéléromètres permet de fournir un signal composé accélérométrique qui élimine toute composante qui ne serait pas due aux fluctuations tangentielles, ce qui améliore la précision de mesure de l'appareil.

L'invention s'applique à un couple d'engrenages quelconque qui peut être cylindrique, conique ou autres.

L'invention peut être appliquée à des bancs de mesures usuelles, ce qui permet de minimiser le coût de mise en oeuvre tout en obtenant des résultats meilleurs. Grâce à la mesure de l'erreur tangentielle, l'invention permet d'effectuer des contrôles dimensionnels et géométriques des engrenages, et également le contrôle du bruit d'engrenages lié à l'erreur cinématique.

Une application immédiate de l'invention est la détermination des relations entre le bruit rayonné par les réducteurs à engrenages cylindriques et l'erreur de transmission tangentielle ou erreur cinématique pour des organes automobiles.

Par ailleurs, on peut mesurer l'erreur cinématique réelle en dynamique dans le but d'optimiser les couples d'engrenages au niveau du bruit. En d'autres termes, la mesure précise de l'erreur cinématique dynamique selon l'invention peut permettre de caractériser, avec une bonne fiabilité, le bruit qui sera émis par un coup le d'engrenages.

L'invention sera mieux comprise à l'étude de la description détaillée d'un mode de réalisation particulier pris à titre nullement limitatif et illustré par les dessins annexés, sur lesquels :

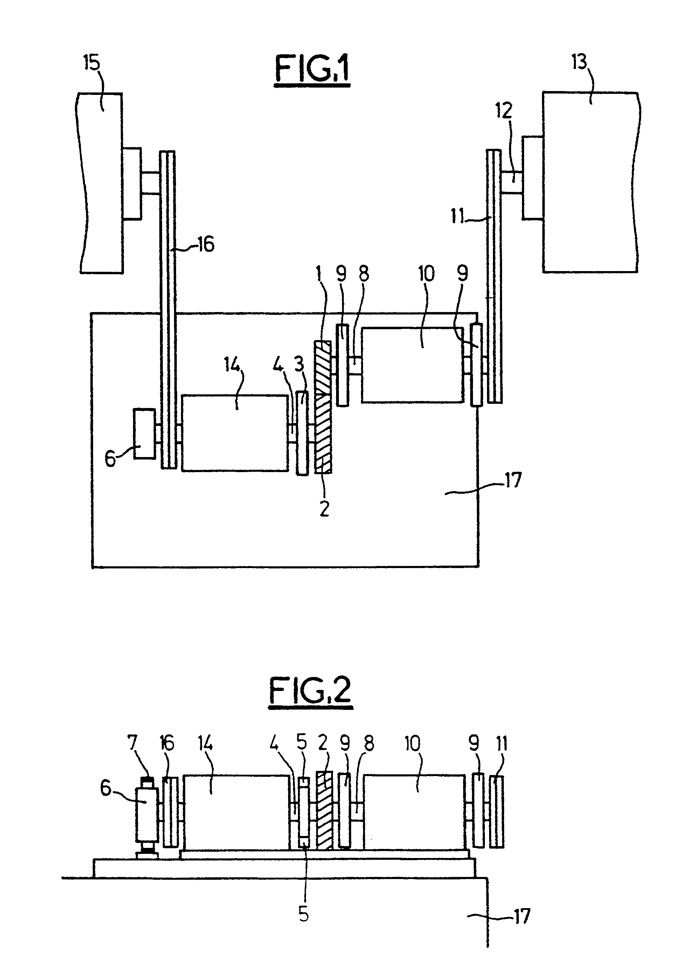

la figure 1 est une vue d'en haut schématique de l'appareil selon l'invention; et

la figure 2 est une vue de côté schématique de l'appareil de la figure 1.

Comme illustré sur les figures, l'appareil comprend un couple d'engrenages primaire 1 entraîneur et secondaire 2 entraîné, un disque de support 3 rendu solidaire de l'arbre secondaire 4 de rotation de l'engrenage secondaire 2 et sur lequel sont montés deux accéléromètres 5 diamètralement opposés l'un à l'autre ou en opposition, un émetteur 6 solidaire de l'arbre secondaire 4, un récepteur ou antenne 7 sous forme annulaire et monté fixe autour de l'émetteur 6, et un moyen de traitement du signal, non représenté, qui peut être un microordinateur relié à l'antenne 7.

Sur l'arbre de rotation primaire 8 de l'engrenage primaire 1 sont montés deux volants d'inertie 9 de part et d'autre d'un boîtier primaire 10 monté autour de l'arbre primaire 8 qui est entraîné en rotation par l'intermédiaire d'une courroie primaire 11 reliée à l'arbre d'entraînement 12 d'un moteur 13.

Les engrenages primaire 1 et secondaire 2 s'engrènent pour former un couple d'engrenages et la rotation de l'engrenages primaire 1 est transmise ainsi à l'engrenage secondaire 2. Le disque de support 3 pour accéléromètres 5 doit être réalisé en matériau rigide afin de ne pas introduire d'erreurs de mesure supplémentaires dues aux déformations dudit disque. De plus, il est préférable de mettre le disque de support 3 au voisinage immédiat de l'engrenage secondaire 2 de façon à minimiser des erreurs de mesure dues à la torsion de l'arbre secondaire 4.

Sur l'arbre secondaire 4 est monté un boîtier secondaire 14. On prévoit également un frein 15 qui agit sur l'arbre secondaire 4 par l'intermédiaire d'une courroie secondaire 16. L'ensemble formé par le couple d'engrenages primaire 1 et secondaire 2, les arbres primaire 8 et secondaire 4 et les pièces qui sont montées autour desdits arbres sont installés sur un bâti stable 17.

Dans cet exemple, l'émetteur 6 est monté à une extrémité de l'arbre secondaire 4. On peut également monter cet émetteur à d'autres emplacements de l'arbre secondaire, y compris sur le disque de support 3 des accéléromètres 5. L'antenne annulaire 7 autour de l'émetteur 6 permet une bonne réception des signaux émis par l'émetteur 6.

Le fonctionnement de l'appareil de l'invention est simple. Le moteur 13 entraîne en rotation l'engrenage primaire 1 par l'intermédiaire de la courroie primaire 11. L'arbre secondaire 4 entre alors en rotation grâce à l'engrènement de l'engrenage secondaire 2 dans l'engrenage primaire 1 en rotation. Le disque de support 3, ainsi que les accéléromètres 5 montés en opposition sont entraînés en rotation par l'arbre secondaire 4. Les accéléromètres 5 délivrent des signaux accélérométriques à l'émetteur 6 qui leur est relié. Le récepteur 7 capte des signaux émis par l'émetteur 6 et transmet ces signaux accélérométriques au moyen de traitement du signal, non représenté, qui effectue un analyse temporelle et fréquentielle instantanée et procède à une double intégration temporelle des signaux accélérométriques afin d'obtenir un déplacement angulaire instantané correspondant. Ce déplacement angulaire peut être exprimé en longueur ou en angle et représente l'erreur cinématique du couple d'engrenages primaire 1 et secondaire 2.

**Revendications**

1. Procédé pour mesurer l'erreur cinématique d'un couple d'engrenages primaire (1) ou entraîneur et secondaire (2) ou entraîné en fonctionnement, caractérisé par le fait qu'il consiste à :

    – mesurer l'accélération tangentielle de l'arbre de rotation (4) de l'engrenage secondaire à l'aide de deux accéléromètres (5) fixés de façon diamètralement opposés l'un à l'autre sur un support rigide (3) rendu solidaire de l'arbre secondaire (4);

    – émettre des signaux de mesure accélérométrique à l'aide d'un émetteur (6) relié aux accéléromètres et rendus solidaires de l'arbre secondaire;

    – capter les signaux accélérométriques émis à l'aide d'un récepteur (7) immobile et placé sans contact au voisinage de l'émetteur; et

    – effectuer une analyse temporelle et fréquentielle instantanée des signaux captés grâce à un moyen de traitement du signal relié au récepteur (7) pour convertir lesdits signaux accélérométriques en signaux de déplacement angulaire instantané du couple d'engrenages primaire et secondaire.

2. Procédé selon la revendication 1, caractérisé par le fait que la conversion des signaux s'effectue au moyen d'une double intégration temporelle instantanée.

3. Appareil de mesure de l'erreur cinématique d'un couple d'engrenages primaire (1) ou entraîneur et secondaire (2) ou entraîné en fonctionnement, l'engrenage secondaire étant engréné dans l'engrenage primaire, caractérisé par le fait qu'il comprend deux accéléromètres (5) montés de façon diamètralement opposée l'un à l'autre sur un support rigide (3) rendu solidaire de l'arbre de rotation (4) de l'engrenage secondaire, un émetteur (6) relié aux accéléromètres et rendu solidaire de l'arbre de rotation secondaire (4), un récepteur (7) immobile et disposé au voisinage de l'émetteur sans contact avec ce dernier, et un moyen de traitement du signal relié au récepteur pour convertir les signaux accélérométriques en signaux de déplacement angulaire instantané du couple d'engrenages primaire et secondaire.

4. Appareil selon la revendication 3, caractérisé par le fait que les accéléromètres (5) sont montés sur un disque (3) placé au voisinage de l'engrenage secondaire (2).

5. Appareil selon la revendication 3, caractérisé par le fait que les accéléromètres (5) sont montés directement sur l'engrenage secondaire (2).

6. Appareil selon l'une des revendications 3 à 5, caractérisé par le fait que le récepteur (7) est réalisé sous forme annulaire et disposé autour de l'émetteur (6).

7. Appareil selon l'une des revendications 3 à 6, caractérisé par le fait qu'il comprend en outre des moyens de freinage (15, 16) de l'arbre secondaire (4).

## FIG.1

## FIG.2

Office européen
des brevets

# RAPPORT DE RECHERCHE EUROPEENNE

Numero de la demande

EP 91 40 1630

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 405 557 (R.A. SINKE) <br> * colonnes 1,2 * <br> --- | 1-7 | G 01 M 13/02 |
| Y | EP-A-0 312 633 (INSTITUT MASHINOVEDENIA IMENI A.A. BLAGONRAVOVA AKADEMII NAUK SSSR) <br> * colonnes 5,6 * <br> --- | 1-7 | |
| A | FR-A-2 439 398 (CENTRO RICERCHE FIAT S.P.A.) <br> * revendications 1-13 * <br> --- | 1,3 | |
| A | US-A-3 580 068 (L.S. HOODWIN) <br> * colonnes 1,2 * <br> --- | 1,3 | |
| A | FR-A-2 458 803 (CERMO) <br> * revendications 1-3 * <br> --- | 1 | |
| A | FR-A-2 410 265 (FIAT S.P.A.) <br> * pages 11-14 * <br> ----- | 1,3 | |

DOMAINES TECHNIQUES RECHERCHES (Int. Cl.5)

G 01 M 13/00

Le présent rapport a été établi pour toutes les revendications

| Lieu de la recherche | Date d'achèvement de la recherche | Examinateur |
|---|---|---|
| BERLIN | 30-08-1991 | DIETRICH A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
&.......................................................................
& : membre de la même famille, document correspondant

EPO FORM 1503 03.82 (P0402)